Europäisches Patentamt

**European Patent Office**

Office européen des brevets

(11) Publication number: **0 208 407**
**A1**

(12) **EUROPEAN PATENT APPLICATION**

(21) Application number: **86304162.0**

(22) Date of filing: **02.06.86**

(51) Int. Cl.⁴: **G 01 S 17/50**

(30) Priority: **01.06.85 GB 8513878**

(43) Date of publication of application:
**14.01.87 Bulletin 87/3**

(84) Designated Contracting States:
**CH DE FR GB IT LI NL SE**

(71) Applicant: **BRITISH AEROSPACE PUBLIC LIMITED COMPANY**
**100 Pall Mall**
**London SW1Y 5HR(GB)**

(72) Inventor: **Hillier, Michael William**
**10 Church Road**
**Thornbury Avon(GB)**

(72) Inventor: **Sayers, Edwin Hugh**
**British Aerospace PLC Naval Weapons Division**
**P O Box 5 Filto Bristol BS12 7QW(GB)**

(74) Representative: **Dowler, Edward Charles et al,**
**British Aerospace Public Limited Company Corporate**
**Patents Department Brooklands Road**
**Weybridge Surrey, KT13 OSJ(GB)**

(54) Laser pulse radiation sensing system and pulse envelope detectors.

(57) Pulse Doppler laser rangefinder systems operate on the detection of the leading of the envelope of the return pulse from a target, the leading edge being determined after the pulse has been demodulated. Demodulation is presently achieved by mixing a local oscillator signal with the pulse but the frequency of the pulse may not be known and the local oscillator frequency would need to be ramped within the duration of a return pulse to match the two frequencies for demodulation. This ramping may cause unsynchronised demodulation of the pulse or even cause the pulse to be missed. Described herein is a laser rangefinder system in which demodulation is achieved by dividing and self-mixing an electrical signal which corresponds to a modulated beam comprising the envelopes of the return pulses from a target.

Croydon Printing Company Ltd.

LASER PULSE RADIATION SENSING SYSTEM AND PULSE ENVELOPE DETECTORS

This invention relates to laser radiation pulse sensing system, for example a rangefinder system and to a pulse envelope detection circuit which is particularly but not exclusively useful for incorporation into the rangefinder system.    A pulse doppler laser rangefinder system is able to measure target range by  timing the return laser pulse and to obtain information about the target velocity by analysis the Doppler shift of the return radiation.  The returned radiation may be optically mixed with a reference laser radiation signal and applied to a radiation sensitive element which produces an electrical IF signal having a frequency equal to the difference between those of the returned radiation and reference radiation.  In order to measure target range, the IF signal is demodulated to retrieve the return pulse envelope and it has been proposed to do this by mixing the IF signal with a local oscillator signal of the same frequency.  However, due to the Doppler shift, the phase and frequency of the IF signal may vary widely and so it has been further proposed to ramp the frequency of the local oscillator until it matches that of the received radiation, ie to perform a kind of frequency search relative to the received radiation.  However, the ranging must be performed within the duration of one pulse and, if the pulses are short, this may not be achievable.

U.S. Patent No. 4,307,347 proposes an envelope detector for a pulse radar system wherein an IF signal, formed by mixing the received RF signal with a local oscillator signal, is applied to one input of a mixer which the other input of the mixer is supplied with a tapped-off portion of the IF signal which has been amplified and then passed through an amplitude limiter and filter. The amplification and amplitude limitation applied to the tapped-off IF signal portion renders the amplitude of the signal applied to the other mixer input constant while the pulse is being received, ie during this time, the amplitude modulation of the tapped-off portion is removed. Meanwhile the filtering removes the harmonic components generated by the limiting so leaving, in effect, a 'local' oscillator signal similar to a true local oscillator signal but generated from the IF signal to be demodulated and therefore automatically having the correct frequency. This proposed envelope detector is relatively complex however. According to one aspect of the invention, there is provided a laser rangefinder system comprising:-

laser beam generating means for generating a laser beam;

optical means for receiving said laser beam and for directing a portion of said laser beam onto a target, the optical means being further operable for receiving a reflected beam from the target and for mixing said reflected beam with a further portion of said laser beam to form a modulated beam;

processing means for receiving said modulated beam and producing an electrical signal corresponding to said modulated beam, the processing means further being operable to demodulate said electrical signal by dividing and self-mixing said signal to form an output signal indicative of the range of the target.

According to a second aspect of the invention, there is provided a laser rangefinder system comprising:-

first laser beam generating means for generating a first beam;

mixing means;

optical means for receiving and directing the first beam onto a target, the optical means also being operable for receiving a reflected beam from the target and for directing said reflected beam onto the mixing means;

second laser beam generating means for generating a second beam, the second beam being directed onto the mixing means where it is combined with the reflected beam to form a modulated beam;

detector means for receiving the modulated beam and for producing an electrical signal corresponding to the modulated beam;

signal processing means for receiving said electrical signal and for demodulating said signal, the demodulation being achieved by dividing and self-mixing said signal to form an output signal indicative of the range of the target.

Advantageously, said first laser generating means is a hybrid laser in which a high power pulsed laser beam and a low power continuous-wave laser beam having the same frequency are produced from the same lasing cavity, and which frequency can be tuned to a given frequency within a frequency range, the high power laser beam being the first beam and the low power beam being a reference beam which is used to check the beam frequency produced by said hybrid laser.

The second laser generating means may comprise a fixed frequency continuous-wave laser, its frequency being chosen such that the modulated beam produced falls within the sensitive range of the detector means.

Preferably, the mixing means comprises a Brewster window.

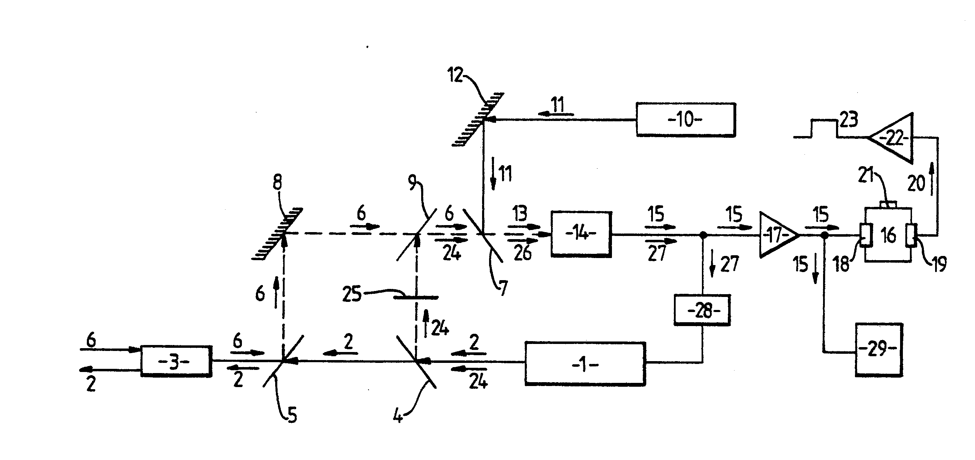

For a better understanding of the invention, reference will now be made, by way of example, to the accompanying drawing, the single figure of which is a schematic block diagram of a laser rangefinder system.

A hybrid T.E.A. main laser 1 is capable of producing a pulsed laser beam and a continuous-wave laser beam from the same optical cavity. Both laser beams have the same frequency and they can be tuned to emit a given frequency within a certain frequency range by varying the length of the optical cavity within the laser 1. This is done by moving one of the cavity mirrors so that the cavity is either lengthened or shortened according to tuning necessary to produce the desired frequency. When operating in the pulsed mode, the laser 1 provides a series of high power pulses typically around 1 MW and having a duration of 1 s, which illuminate a target (not shown). Whilst in the continuous mode, laser 1 provides a low power reference beam, typically around 1 W, which is used to determine offset frequencies as will be described in more detail later. The laser 1 emits no radiation during the 100 s time period prior to a pulse being emitted. Pulses 2 from the laser 1 are directed onto the target by rangefinder optics 3, the pulses 2 passing to the optics 3 _via_ two beamsplitters 4 and 5 which may be Brewster windows. Pulses 6 returned from the target are directed onto a beamsplitter 7 _via_ beamsplitter 5, a mirror 8 and a further beamsplitter 9 (beamsplitters 7 and 9 may also be Brewster windows). A continuous-wave laser 10 which emits radiation at a given frequency projects a beam 11 onto beamsplitter 7 via mirror 12. At the beamsplitter 7, the pulses 6 interfere with the beam 11 to form a modulated beam 13 which has an offset frequency depending on the frequencies of the radiation emitted by lasers 1 and 10, and the amount by which the frequency of the returned pulses has been shifted due to Doppler effects ie due to velocity of a moving target. This modulated beam 13 is incident on a single-element photodetector 14 which converts the optical beam 13 into an electrical signal 15. The signal 15 passes to an envelope detector 16 via amplifier 17. The detector 16 comprises a power splitter 18 (a simple co-axial Tee junction for example or a conventional diode splitter) which divides the amplified signal 15 into two parts, and a mixer 19 (a diode mixer for example) which self-mixes the two signal parts to produce an output signal 20 which has been demodulated, one of the signal parts being used instead of a local oscillator to provide a reference signal. The detector 16 also includes a variable phase shifter or trimmer 21 which is used to compensate for small variations in the paths of the two signal parts once they have been divided by the splitter 18 and before they are self-mixed. The trimmer 21 may comprise a piece of coaxial wire for example. The output signal 20 is passed to an amplifier 22 to produce a signal 23 from which the time interval between the leading edge of each pulse contained within the signal 23 can be measured and the target range determined. The output signal 20 may contain harmonic frequency components which may need to be filtered out by a suitable low pass filter (unless the components are outside the bandwidth of say the amplifier 22 in which case they would be effectively filtered out anyway).    The laser 1 operates in the continuous mode during the periods in which a pulse is not being produced, to provide a reference beam 24 which is reflected by beamsplitter 4 towards a shutter 25 which is closed when the laser 1 is operating in the pulsed mode and open when the laser is operating in the continuous mode. The beam 24 is directed onto beamsplitter 7 _via_ beamsplitter 9 where it interferes with the beam 11 from laser 10 as previously described, to form a reference beam 26 which is then incident on the photodetector 14, the photodetector producing an electrical reference signal 27 which is sampled by an offset frequency controller 28. The controller 28 compares the signal 27 with that required for the efficient operation of the photodetector 14 and if the signal 27 does not fall within the required range, the controller 28 tunes the laser 1 to another frequency (by altering the lasing cavity length of the laser 1) which would produce an acceptable result _ie_ the offset frequency of the modulated beams incident on the photodetector 14 falls within the sensitive range of the device.

A spectrum analyser 29 may be used to sample the amplified signal 15 so that the velocity of the target may be determined. This is achieved by analysing the frequencies present within each pulse envelope.

The shutter 25, when closed _ie_ during pulsed mode operation periods of the laser 1, protects the photodetector 14 by stopping the high power pulses reaching the photodetector.

If a continuous-wave laser was used instead of a pulsed laser, it would be possible to demodulate the return signal from a target by mixing it with a portion of the outgoing beam.  However, as a continuous-wave laser is not as powerful as a pulsed laser only relatively shorter ranges may be determined.

# CLAIMS

1.   A laser radiation pulse sensing system including optical means for directing received laser radiation pulses and reference laser radiation to a radiation sensor for the sensor to form a pulse modulated alternating electrical signal having a frequency determined by the difference between the frequencies of the received and reference radiation and a pulse envelope detector which comprises splitter means for splitting said electrical signal into two portions each retaining the modulation waveform of the alternating electrical signal, and mixer means for forming the product of said two portions.

2.   A pulsed laser rangefinder system comprising a tu nable hybrid laser device capable of producing laser radiation pulses and continuous wave laser radiation from the same optical cavity, a reference laser radiation source, radiation sensitive sensor means, multiple path defining optical means for projecting laser radiation reflected from the target to said sensor means, for directing radiation from said hybrid laser to said sensor means, and for directing radiation from said reference source to said sensor means, a frequency controller operable for responding to the output of the sensor means for tu. ning said hybrid laser device, envelope detector means for demodulating the output of the sensor means and control means which is connected for controlling said hybrid laser device and said optical means and is operable for causing the hybrid laser device to produce a laser pulse which projected towards said target and for causing the resultant reflected pulse to be passed to said sensor along with radiation from said reference source whereby the sensor produces an IF signal having an envelope corresponding to said reflected pulse and said IF signal is demodulated by said envelope detector means, and which is further alternatively operable for causing said hybrid laser device to produce continuous wave laser radiation from said reference source and for causing said frequency controller to then become operable to tune the hybrid laser in dependence upon the signal from the sensor means.3.   A laser rangefinder system comprising;-

laser beam generating means for generating a laser beam;

optical means for receiving said laser beam and for directing it onto a target, the optical means being further operable for receiving a reflected beam from the target and for mixing said reflected beam with an unreflected laser beam to form a modulated beam;

processing means for receiving said modulated beam and producing an electrical signal corresponding to said modulated beam, the processing means further being operable to demodulate said electrical signal by dividing and self-mixing said signal to form an output signal indicative of the range of the target.

4.    A laser rangefinder system comprising:-

first laser beam generating means for generating a first beam;

mixing means;

optical means for receiving and directing the first beam onto a target, the optical means also being operable for receiving a reflected beam from the target and for directing said reflected beam onto the mixing means;

second laser beam generating means for generating a second beam, the second beam being directed onto the mixing means where it is combined with the reflected beam to form a modulated beam;

detector means for receiving the modulated beam and for producing an electrical signal corresponding to the modulated beam;

signal processing means for receiving said electrical signal and for demodulating said signal, the demodulation being achieved by dividing and self-mixing said signal to form an output signal indicative of the range of the target.

5.    A system according to claim 4, wherein said first laser generating means is a hybrid laser in which a high power pulsed laser beam and a low power continuous-wave laser beam having the same frequency are produced from the same lasing cavity, and which frequency can be tuned to a given frequency within a frequency range, the high power laser beam being the first beam and the low power beam being a reference beam which is used to check the beam frequency produced by said hybrid laser.

6.    A system according to claim 4 wherein the second laser generating means may comprise a fixed frequency continuous-wave laser, its frequency being chosen such that the modulated beam produced falls within the sensitive range of the detector means.

7.    A system according to claim 4, wherein the mixing means comprises a Brewster window.

8.    A system according to any one of claim 4, wherein said signal processing means includes a power splitter for dividing said electrical signal into two signal parts.

9.   A system according to claim 8, wherein said signal processing means further includes a variable phase shifter or trimmer for compensating for small variations in the paths of said two signal parts before self-mixing.

10.   A system according to claim 8, wherein said trimmer is a length of coaxial wire.

11.   A system according to claim 5, wherein said reference beam is mixed with said second beam to provide a control signal to control the frequency of said first laser beam generating means.

12.   A system according to claim 4, wherein said electrical signal is sampled by a spectrum analyser to determine the velocity of the target.

0208407

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | DE-B-2 819 320 (S.A. DE TELECOMMUNICATIONS) <br> * figure 2; column 6, line 55 - column 7, line 38 * | 1,2 | G 01 S 17/50 |
| Y | US-A-4 515 471 (D.D. EDEN) <br> * figure 1; column 5, lines 44-54 * | 1,2 | |
| A | US-A-3 790 278 (C.J. BUCZEK et al.) <br> * figure 1; column 4, line 31 - column 5, line 13 * | 3 | |
| A | DE-A-2 112 325 (COMPAGNIE GENERALE D'ELECTRICITE) <br> * figure 1; page 3, lines 18-25 * | 12 | |
| D,A | US-A-4 307 347 (D.N. THOMSON) <br> * figure 2, abstract * | | TECHNICAL FIELDS SEARCHED (Int Cl 4) <br><br> G 01 S 17/50 |
| A | DE-B-2 819 321 (S.A. DE TELECOMMUNICATIONS) <br> * figure 1; column 3, lines 5-14 * | | |

The present search report has been drawn up for all claims

| Place of search | Date of completion of the search | Examiner |
|---|---|---|
| BERLIN | 01-10-1986 | BREUSING J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82